(19) Europäisches Patentamt

European Patent Office

Office européen des brevets

(11) **EP 4 042 675 B1**

(12) **EUROPEAN PATENT SPECIFICATION**

(45) Date of publication and mention
of the grant of the patent:
**23.08.2023 Bulletin 2023/34**

(21) Application number: **20878856.2**

(22) Date of filing: **25.10.2020**

(51) International Patent Classification (IPC):
*H04N 9/31* *(2006.01)*        *G02B 27/10* *(2006.01)*
*G02B 5/30* *(2006.01)*        *G02B 27/28* *(2006.01)*
*G03B 21/20* *(2006.01)*

(52) Cooperative Patent Classification (CPC):
**H04N 9/3129; G02B 6/00; G02B 26/101;
G02B 27/0093; G02B 27/0172; G03B 21/2013;
G03B 21/2033; G03B 21/2073; H04N 9/3152;
H04N 9/3161; H04N 9/3164; H04N 9/3167;
H04N 9/3173;** G02B 27/104; G02B 2027/0112;

(Cont.)

(86) International application number:
**PCT/IL2020/051113**

(87) International publication number:
**WO 2021/079371 (29.04.2021 Gazette 2021/17)**

(54) **LASER-ILLUMINATED DISPLAYS WITH ENHANCED UNIFORMITY**

LASERBELEUCHTETE ANZEIGEN MIT VERBESSERTER GLEICHMÄSSIGKEIT

DISPOSITIFS D'AFFICHAGE ÉCLAIRÉS PAR LASER PRÉSENTANT UNE UNIFORMITÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.10.2019   US 201962924708 P**
**24.11.2019   US 201962939630 P**
**11.02.2020   US 202062972688 P**
**23.07.2020   US 202063055380 P**

(43) Date of publication of application:
**17.08.2022 Bulletin 2022/33**

(73) Proprietor: **Lumus Ltd.**
**7403631 Ness Ziona (IL)**

(72) Inventors:
• **DANZIGER, Yochay**
**2514700 Kfar Vradim (IL)**
• **MICHAELS, Daniel**
**5252007 Ramat Gan (IL)**

(74) Representative: **Kancelaria Eupatent.pl Sp. z.o.o**
**Ul. Kilinskiego 185**
**90-348 Lodz (PL)**

(56) References cited:
**WO-A1-2019/111237        US-A1- 2011 292 321**
**US-A1- 2013 335 708        US-A1- 2015 288 937**

EP 4 042 675 B1

(52) Cooperative Patent Classification (CPC): (Cont.)
G02B 2027/0147

**Description**

FIELD AND BACKGROUND OF THE INVENTION

The present invention relates to displays for displaying an image to a viewer and, in particular, it concerns displays that are illuminated by laser light sources.

Certain displays, such as near eye displays and head-up displays, need to be of high brightness to be suitably visible when used in the bright conditions, such as daytime outdoor use. This is particularly true for augmented reality displays, where visual elements are displayed overlying bright outdoor scenery.

Laser-based illumination systems can achieve this average high brightness, when used for illuminating a spatial light modulator (SLM), or when used alone by scanning a very bright spot across the projected field. The scanning is performed by two perpendicular actuators moving a single mirror or two separate mirrors. For color displays, the bright spot is generated by three separate lasers (red, green and blue).

While use of lasers offers benefits of brightness and energy efficiency, it may also raise issues of image non-uniformity and, in some cases, questions of eye-safety.

US2011292321 discloses a light guide device that can provide a backlight for an LCD or a projection display. The light guide device includes a light-input end and an opposing end, opposing left and right sides which join the light-input end and the opposing end, and opposing front and back surfaces which join the light-input end and the opposing end. A birefringent film is provided on the opposing left and right sides of the light guide which switches a polarization of incident light.

WO2019111237 discloses an image projector that includes a spatial light modulator (SLM) with a two dimensional array of pixel elements controllable to modulate a property of light transmitted or reflected by the pixel elements. An illumination arrangement delivers illumination to the SLM. A collimating arrangement collimates illumination from the SLM to generate a collimated image directed to an exit stop. The illumination arrangement is configured to sequentially illuminate regions of the SLM, each corresponding to a multiple pixel elements.

SUMMARY OF THE INVENTION

The present invention is a display as defined by the appended claims.

BRIEF DESCRIPTION OF THE DRAWINGS

The invention is herein described, by way of example only, with reference to the accompanying drawings, wherein:

FIGS. 1A and 1B are schematic side views of a display for displaying an image to a viewer, the displays employing reflective and diffractive coupling-out configurations, respectively;

FIG. 2A illustrates schematically a laser-illuminated image projector for use in the displays of FIGS. 1A and 1B;

FIGS. 2B-2D illustrate laser scanning patterns in the cases of normal scanning operation, failure of a vertical scanning mirror and failure of a horizontal scanning mirror, respectively;

FIGS. 3A-3C are schematic illustrations of scanning patterns for a forward scan, back scan, and a double scan, of a scanning pattern for implementation using the image projector of FIG. 2A;

FIGS. 3D and 3E are schematic illustrations of scanning patterns for a forward scan and a double scan, of a scanning pattern for implementation using the image projector of FIG. 2A employing two lasers;

FIG. 4A is a schematic illustration of a variant implementation of a laser illumination section of the image projector of FIG. 2A, employing three side-by-side lasers;

FIG. 4B is a schematic representation of a first option for relative deployment of the laser beams relative to the scanning axes;

FIGS. 4C-4E illustrate laser scanning patterns in the cases of normal scanning operation, failure of a vertical scanning mirror and failure of a horizontal scanning mirror, respectively, when implemented with the deployment of lasers of FIG. 4B;

FIG. 5A is a schematic representation of a second option for relative deployment of the laser beams, staggered relative to the scanning axes;

FIGS. 5B-5D illustrate laser scanning patterns in the cases of normal scanning operation, failure of a vertical scanning mirror and failure of a horizontal scanning mirror, respectively, when implemented with the deployment of lasers of FIG. 5A;

FIG. 6A is a schematic representation of relative deployment of six laser beams, staggered relative to the scanning axes;

FIG. 6B is a schematic illustration of a variant implementation of a laser illumination section of the image projector of FIG. 2A, employing six side-by-side lasers;

FIGS. 6C and 6D illustrate laser scanning patterns in the cases of failure of a horizontal scanning mirror and failure of a vertical scanning mirror, respectively, when implemented with the deployment of lasers of FIG. 6A;

FIG. 7A is a schematic illustration of the traces followed by each color during scanning of a configuration similar to FIG. 5A;

FIGS. 7B and 7C are plots of image intensity as a function of position along the line 207 of FIG. 7A, before and after a foveated color saturation reduction according to an aspect of the present invention;

FIG. 7D is a schematic illustration of the traces followed by each color during scanning of a configuration similar to FIG. 6A;

FIGS. 8A and 8B are schematic illustrations of scanning patterns for a forward scan and a double scan, of a scanning pattern for implementation using the image projector of FIG. 2A employing two lasers with scanning traces spaced apart by a pixel spacing;

FIG. 9 is a schematic illustration of the traces followed by each color during scanning of a configuration similar to FIG. 6A but with increased spacing between the laser scanning traces of similar colors;

FIG. 10 is a block diagram of a display controller for implementing aspects of the present invention;

FIG. 11A is a schematic representation of a waveguide-based optical aperture expander for delivering an image from an image projector to an eye of a viewer;

FIG. 11B illustrates two intensity patterns generated by polarized light propagating through the optical aperture expander according to a first polarization, a second polarization, and the sum of the two patterns;

FIG. 12 is a schematic representation of a display employing a plurality of side-by-side lasers for each color to facilitate depolarizing of a projected image;

FIG. 13A is a schematic representation of an alternative implementation of a display employing free-space optics, and with a plurality of orthogonally polarized laser beams for each color introduced along a common light path;

FIG. 13B illustrates an alternative configuration of lasers for use in the display of FIG. 13A;

FIG. 14 illustrates schematically a further configuration of a display according to an aspect of the present invention;

FIG. 15A is a schematic representation of a depolarizer integrated with a waveguide for use in a display according to an aspect of the present invention; and

FIG. 15B is a schematic illustration of the orientation of the primary axes of a birefringent material employed in the depolarizer of FIG. 15A.

## DESCRIPTION OF THE PREFERRED EMBODIMENTS

The present invention is a display that employs laser illumination.

The principles and operation of displays according to the present invention may be better understood with reference to the drawings and the accompanying description.

By way of introduction, the present invention includes a number of distinct aspects, each of which addresses issues relating to implementation of a display using laser illumination, and which can be used to advantage individually or combined in synergy to provide significant advantages.

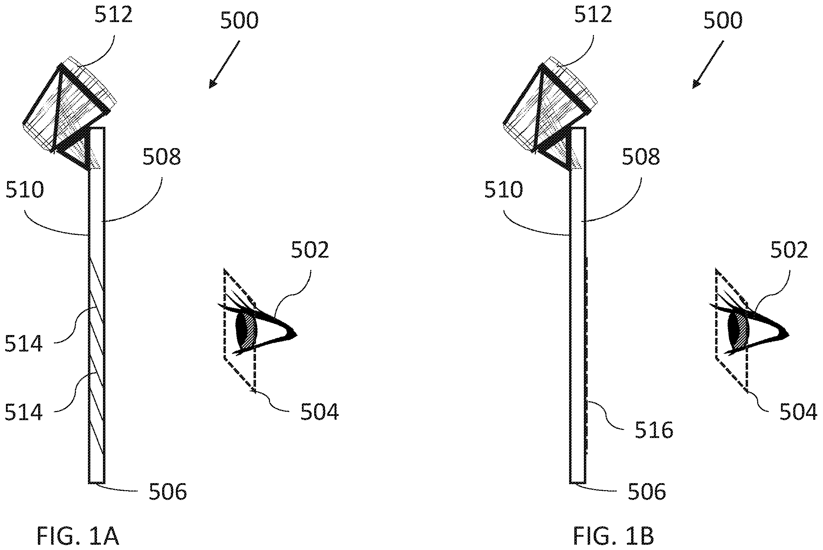

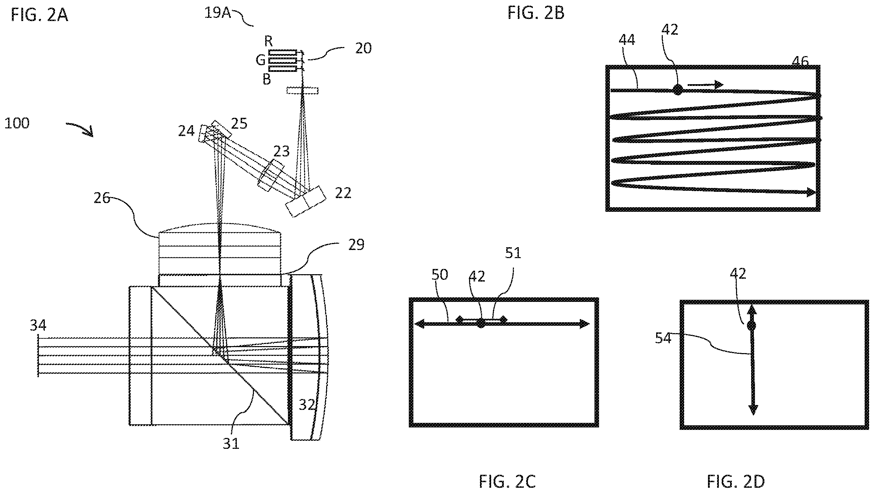

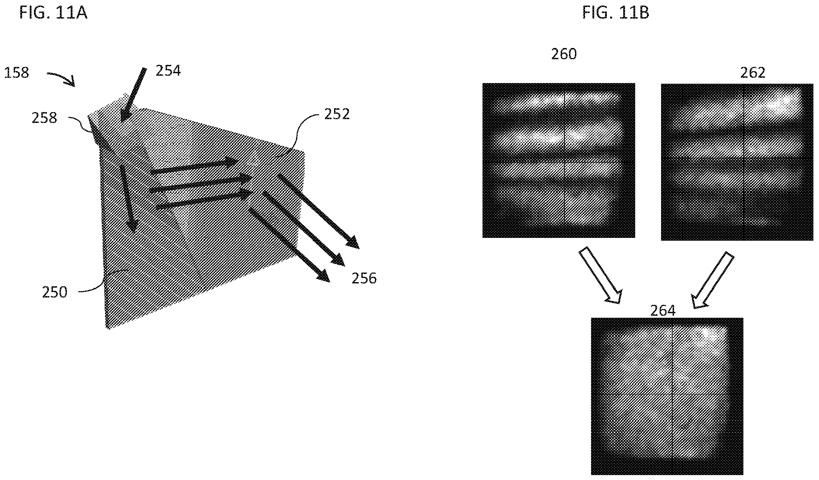

More specifically, referring to the drawings, FIGS. 1A and 1B provide a schematic overview of a typical display in which the various aspects of the present invention are implemented, FIGS. 2A-10 relate to aspects of the invention specific to displays based on a scanning motion of rapidly-modulated laser beams, and FIGS. 11A-15B relate to aspects of the present invention addressing issues which arise from the polarization properties of laser illumination.

Device Overview

Referring now to the drawings, FIGS. 1A and 1B show a schematic overview of the major optical components of the system.

In general terms, the invention is exemplified herein with reference to a display **500** for displaying an image to an eye **502** of a user, the eye being located within an eye motion box **504.** In certain non-limiting implementations, the display includes a light-guide optical element (LOE) **506,** interchangeably referred to herein as a "substrate" or "waveguide", having a pair of major external surfaces **508, 510** that are parallel to each other. An image projector **512** projecting image illumination of a collimated image is optically coupled to LOE **506** so as to introduce the image illumination into the LOE so as to propagate within the LOE by internal reflection at major external surfaces **508, 510.** The image projector **512** is referred to interchangeably as a "POD".

A coupling-out configuration, associated with at least a coupling-out region of LOE **506,** is configured to redirect at least part of the image illumination propagating within the LOE towards the eye motion box **504** for viewing by the eye **502** of the user. Typical implementations of the coupling-out configuration include a reflective coupling-out arrangement implemented, for example, as a plurality of mutually-parallel partially reflective surfaces **514,** oblique to major external surfaces **508, 510,** within the LOE **506,** as illustrated in FIG. 1A. An alternative coupling-out arrangement employs one or more diffractive optical element **516,** associated with LOE **506** and configured to couple out a proportion of the image illumination, as illustrated in FIG. 1B. Details of implementations of both reflective and diffractive coupling-out arrangements for guided-light displays are well known in the field, and in the interest of conciseness, will not be described here in detail.

Considerations Relating to Scanning Systems

FIG.2A illustrates schematically the optical arrangement of an image projector 512 suitable for use in display 500. Image projector 512 uses a set of lasers 19A. The lasers R, G and B (designating red, green and blue, respectively) may be combined to a single beam having a single polarization by dichroic combiner 20 (mini lenses not shown). The combined diverging beam is reflected by mirror 22 and refracted by lens 23 onto scanning mirrors 24 and 25. Each of these mirrors scans about an orthogonal axis. Lens 26 generates pupil imaging needed for coupling scanned beam into waveguide pupil 34. A micro-lens array (MLA) or diffuser is preferably placed at image plane 29 to expand the beam. The implementation illustrated here, based on a polarizing beam splitter prism, a polarizing beam splitter (PBS) 31 diverts the beam to lens 32 that collimate the beam to exit pupil 34, where they enter the LOE (not shown).

FIG. 2B shows a typical two-dimensional scanning pattern covering the scanned image field. The combined spot (of all lasers) 42, is scanned along trajectory 44 while its intensity is modulated according to the image data to generate image field 46.

Without in any way limiting the utility of the present invention, which has been established independent of the accuracy of the following theoretical analysis, for the purpose of enhancing an understanding of certain aspects of the present invention, it is helpful to assess certain eye-safety issues as follows. In the following, we will assume round numbers to estimate only approximately the intensity impinging on the eye.

Assuming 800x600 pixels in image that is being completely refreshed at 60 Hz then the lateral (resonant) mirror must oscillate at 60x600/2= 18KHz (neglecting scan overhead and assuming illumination at both directions of motion). Therefore, the time per line is (1/18,000)/2=27 microsecond.

$$\text{The time per pixel is 27e-6/800=35 nanosecond}$$

$$\text{The time per frame is 1/60=16 millisecond}$$

In the following calculation we assume that the illumination is optimized for outdoor daytime 5000 NITs of white field across the entire image.

Eye safety considerations

The following analysis is given for a rough estimate of parameters, and should not be relied upon as a basis for eye safety calculations.

A malfunction scenario may assume that one or both scanners become inoperative while the lasers continue to operate at power equivalent to white screen (nominal max power). If both scanners stop oscillating and spot 42 becomes stationary, then the intensity will be concentrated on one pixel:

$$\text{5000NITs x 600 x 800 = 2.4xe9 NITs}$$

This is a very bright spot that will cause the person to blink and eventually remove the near-eye display. For comparison looking directly at sun at noon is 1.6xe9 Nits. Therefore, this situation of scanner stop is uncomfortable for the user, and can be hazardous to the eye.

FIG. 2C illustrates a situation where scanner 25 is not working and only scanner 24 (resonant) is working. Since the resonant mirror moves fast, we assume that all power of the screen is distributed along all the line 50 therefore the intensity in this line will be:

Intensity per one pixel! number of pixels per line= 2.4xe9 NITs /800= 3e6 NITs

This is less damaging compared to single spot but continue to be very high and uncomfortable for the user.

FIG. 2D shows the line scan generated if scanner 24 stops working and only scanner 25 is active. In this case the intensity per pixel can be approximated to be the same as per standing spot (2.4xe9 NITs) since the movement of this scanner is slow (millisecond per line while the thermal constant of damage to eye is in microseconds).

Scan patterns considerations

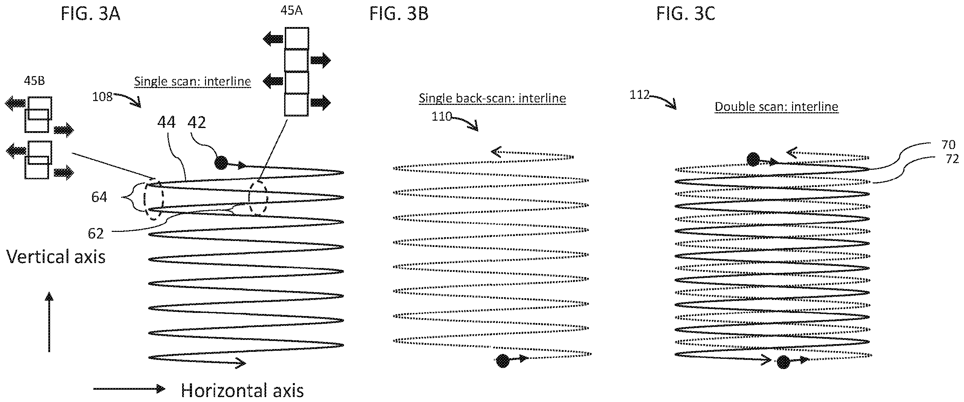

FIG. 3A shows a plot 108 in which a scanning laser spot 42 follows a pattern 44. This pattern is generated by a fast, lateral scanning resonant mirror 24 and linear (controlled) mirror 25.

Inset 45A shows schematically the pixel placement in the center of the field where the vertical speed is set so that the pixels generated during movement in both directions (marked as arrows) are adjacent, i.e., single pixel pitch spacing.

At the edge of the field, as illustrated in inset 45B, some of the pixels overlap, while in other places there is a gap.

It is apparent that at scan 108 the gap between lines 62 at the center of the field is one pixel (optimal adjacent pixels), while the gap at the edge 64 of the pattern approaches two pixels (two pixels superimposed and one pixel gap to the next pixel). The back-scan 110 in FIG. 3B shows similar pattern. The scanning lines are preferably located at different locations, as shown in the combined trace 112 of FIG. 3C. The traces at both sides of the field and the gaps 70 and 72 appear sequentially, and may therefore cause flicker at the edge of the field.

It is noted that human vision is typically particularly sensitive to flickering at the peripheral region of vision and much less sensitive at center of vision. Consequently, the presence of fast changing non-uniformities (flickering) at the side of the scanned image can be very disturbing to many observers.

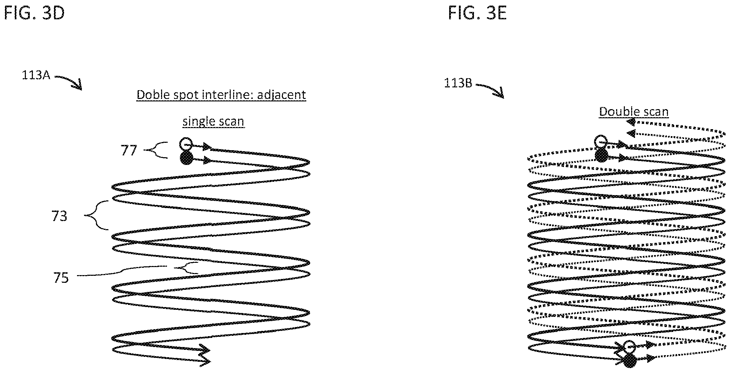

FIGS. 3D and 3E illustrate a further option for a two channel interline scan where every spot represents all of the colors overlapping. Trace 113A of FIG. 3D shows a single frame while 113B of FIG. 3E shows the back-trace overlayed. It is apparent that if there is no gap between the channels (marked as empty and full circles, shown as distance of one pixel) then there will be a gap 73 of two pixels at the edge of the field and no gap at center 75 (adjacent having spacing of one pixel). Therefore, as in single channel, the gaps will cause flicker at the edges.

Color considerations

There are several conflicting considerations with regard to the powers of the individual lasers. On one hand, the relative power of the three color sources must be adjusted to provide a desired level of white balance when the colors are mixed. On the other hand, the absolute powers must be below eye safety thresholds. The latter requirement is more stringent for blue light than for red and green light. Therefore, the blue illumination is most severely limited for safety reasons, and the laser power for the other colors is necessarily well below their safety limits, in order maintain white balance. As a result, the total image brightness is reduced because of the safety limit placed on the blue laser power.

Polarization considerations

The present invention relates to displays which employ illumination generated by lasers. The term "laser" is used herein broadly to any type of light-generating laser. For compact devices, diode-lasers or S-LEDs are particularly preferred. These generate polarized light with a spectral bandwidth typically less than 1 nanometer. When used together with a waveguide for relaying the image to the eye, the polarized image illumination output by the POD generates a non-uniform output image. This is because the polarization of the light changes during Total Internal Reflection (TIR) while the output coupling mechanism (diffractive or reflective) is polarization sensitive. The high coherence and fast scan rate of the laser beam makes it not practical to depolarize every laser actively (for example by variable LCD) or passively (birefringent narrow window such crystal Quartz).

A number of approaches will now be discussed, corresponding to various aspects of the present invention, for addressing some of the above limitations arising from the use of lasers.

Intensity reduction

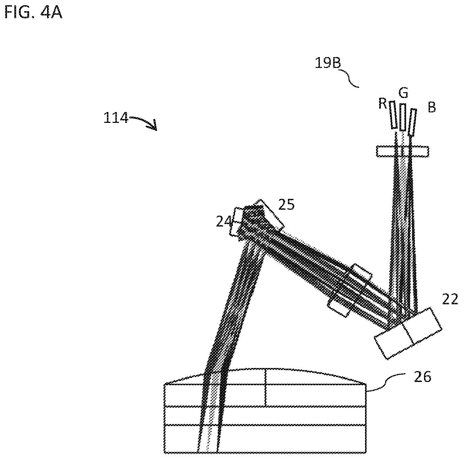

One family of implementations according to an embodiment of the present invention is illustrated in FIG. 4A as optical arrangement 114. This optical arrangement replaces the upper section of device 100 (FIG. 2A), differing from that arrangement in that lasers R, G and B are here combined side-by-side geometrically as 19B, instead of combining them into a single beam using dichroic combiner 20. As a result, the beams of the three lasers do not overlap. The rest of the device may be, for example, similar to the other details of FIG. 2A and FIG. 1A or 1B.

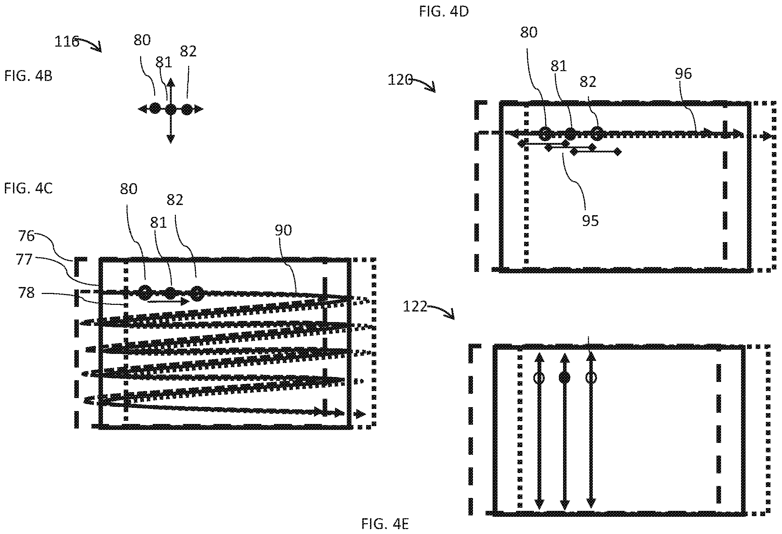

FIG. 4B shows one possible deployment of the orientation of the three lasers spots 80, 81 and 82, as they appear on the image plane (three circles). The two orthogonal axes represent the axis of scanning of mirrors 24 and 25.

The image generated by scanning the lasers is shown in FIG. 4C. Here, three images are generated with some shift: laser 76 related to spot 80, 77 to 81 and 78 to 82. The scanning pattern of the spots is shown as 90 (dashed, solid and dotted lines). Clearly, the horizontal offset can be corrected digitally and only the region of overlap used.

The advantage of three spots is that the intensity is distributed so every spot has 1/3 the intensity (this is an approximation). So, if both scanners stop working then the intensity per spot is equivalent to (color not considered in this calculation for clarity):

2.4e9 NITs 13=800e6 NITs

Which is lower compared to single combined spot. This will generate observable reduction of brightness to the eye if spots are spaced apart at least 0.5 degree.

The scanning pattern of the three spots in of FIG. 4B is shown in FIG. 4C. It is apparent that the pattern of all three lasers is almost overlapping. Consequently, same eye section is illuminated by all three lasers at very short interval. This aspect of the illumination is emphasized in FIG. 4D, that represents line 96 generated when scanner 25 malfunctions and does not move. In this case spots 80, 81 and 82 have approximately overlapping path thereby increasing the brightness impact. Therefore, the apparent brightness to the user can be approximated to be 3e6 NITs equivalent to FIG. 2C. Nevertheless, for spot separation of more than 0.5 degrees, the impact on the eye is lower than a single spot.

FIG. 4E shows the scan pattern if scanner 24 malfunctions and stops working. In this case, the line described in FIG. 2D is now split to three lines having 1/3 the intensity compared to the combined alternative of FIG. 2D.

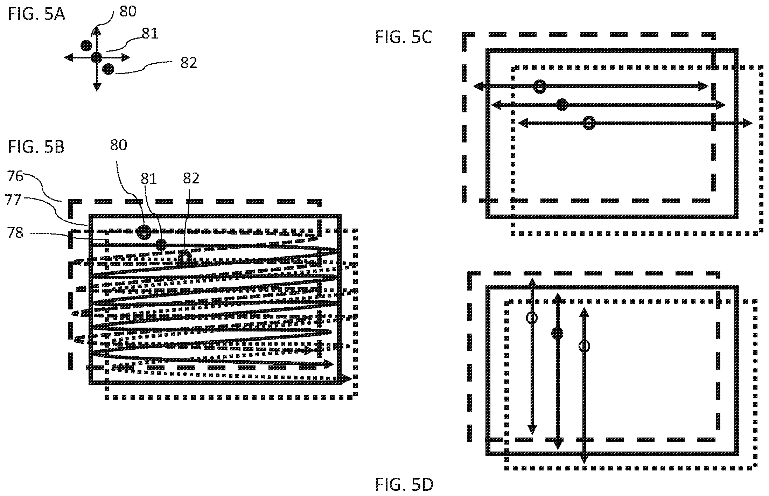

A more optimal arrangement for reducing potential damage to the eye is shown in FIGS. 5A-5D. FIG. 5A shows the laser arrangement staggered at an angle relative to both scanning axes. The scanned field is shown in FIG. 5B. The scanned field for each laser 76, 77 and 78 is shifted vertically as well as horizontally relative to the other scanning patterns. Although the spacing is illustrated here schematically as being similar to, or smaller than, the pixel pitch, depending on the structural implementation, the angular spacing between the beams is preferably at least 0.5 degrees, and may correspond to multiple pixel dimensions, and in some cases, in excess of 20, or even 50, pixel dimensions. The scanning patterns are most preferably completely non-overlapping (neglecting cross-overs), therefore substantially reducing local intensity in every pixel during normal operation. This is a substantial advantage for a display device intended to be used continuously.

FIGS. 5C and 5D illustrate the line scan patterns generated when scanner 25 or 24, respectively, malfunction. It is apparent that, with the tilted laser orientation, both cases avoid scanning overlap, so that local brightness is reduced by factor of 3 in both cases.

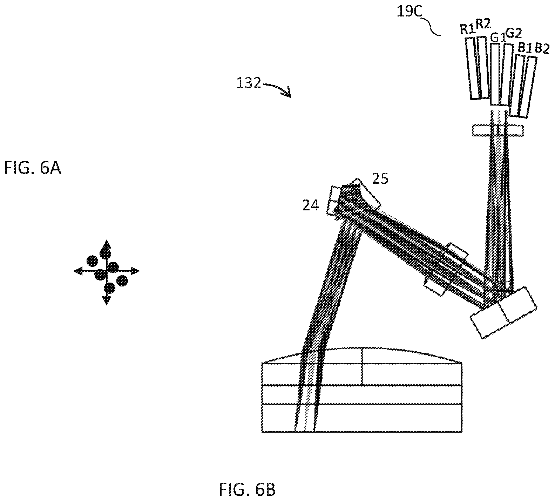

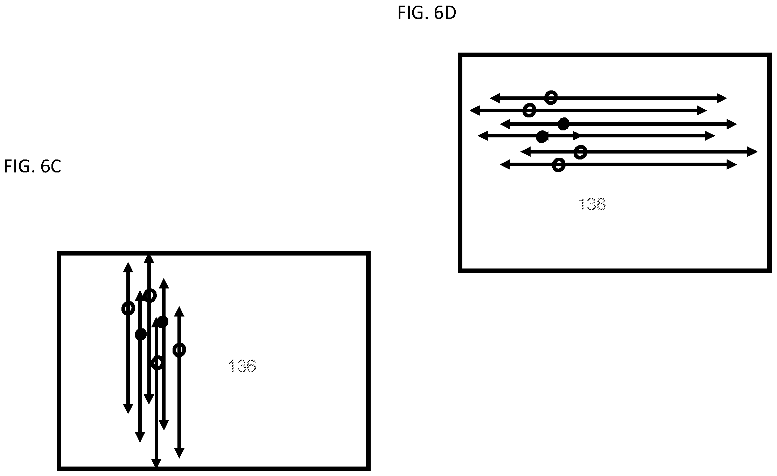

FIG. 6A shows a further non-limiting example of an architecture employing a combination of six lasers. A partial view of a device implementing such an architecture is illustrated in FIG. 6B as arrangement 132, where the laser assembly 19C is similar to the combination of the lasers 19B of FIG. 4A, but with two red lasers (R1, R2), two green (G1, G2) and two blue (B1, B2). Placement of the lasers is shown only schematically. FIG. 6A shows schematically a preferred alignment of the laser spots at the image plane in a diagonal arrangement. FIGS. 6C and 6D illustrate patterns 136 and 138, respectively, representing the line scans which would result from malfunction of the respective scanning mechanisms, and show the non-overlapping line patterns that would be generated by the lasers. Consequently, brightness is reduced by a factor of roughly six relative to a combined single spot architecture.

Other laser orientations are also possible. In all cases, particularly preferred implementations avoid having more than one laser located along a line parallel to either of the principal scanning axes.

Blue laser blurring for eye safety and computation load reduction

It is noted that perception of color by the human eye is more sensitive to resolution at green wavelengths than it is at blue and red wavelengths of the visual spectrum. Therefore, image sharpness, as measured by the optical point-spread-function (PSF) in the image plane, is less important for blue and red illumination than it is for green illumination.

On the other hand, from a laser safety standpoint, the maximum permissible exposure (MPE) is approximately 0.1 mW/cm2 for long-term (e.g. several hours), direct ocular exposure to blue light and approximately 1.0 mW/cm2 for green light. (These figures are based upon Maini, A. K. (Ed.). (2013). Lasers and Optoelectronics: Fundamentals, Devices and Applications, 599-603. https://doi.org/10.1002/9781118688977, Appendix A, tables A.4 and A.6.)

To take advantage of these observations, according to one aspect of the present invention, a display for displaying an image to a viewer employs a set of laser light sources including at least one of each of a red source R1, R2 generating a red light beam, a green source G1, G2 generating a green light beam, and a blue source B1, B2 generating a blue light beam. A scanning optical arrangement employing at least one scanning mirror 24, 25 generates a scanning motion of the red light beam, the green light beam and the blue light beam in a two-dimensional scanning pattern. A display controller, including at least one processor, is associated with the set of laser light source and with the scanning arrangement, and is configured to modulate an intensity of each of the laser light sources synchronously with the scanning motion so as to generate an image at an image plane. A collimating optical arrangement collimates light from the image at the image plane for display to the viewer.

It is particular feature of certain embodiments of one aspect of the present invention that the blue source and/or the scanning optical arrangement are configured such that a point spread function of the blue light beam at the image plane is at least twice as wide, and preferably at least three times as wide, as a point spread function of the green light beam.

The width of the point spread function (PSF) may be intuitively defined by the apparent width of the laser spot in the image plane, but can be more precisely defined by using the full width at half maximum (FWHM) in relation to the spot intensity.

By way of a specific example, the power density of blue light illumination on the image plane is reduced by a factor of 10 by broadening the PSF (diameter) by a factor of about $10^{0.5} = 3.2$, while maintaining the PSF of the green and preferably the red illumination at their optimal values. Consequently, the power of the blue laser, and the total power of all three lasers, can be increased by a factor of 10, without exceeding the damage threshold to the eye, as determined by the MPE.

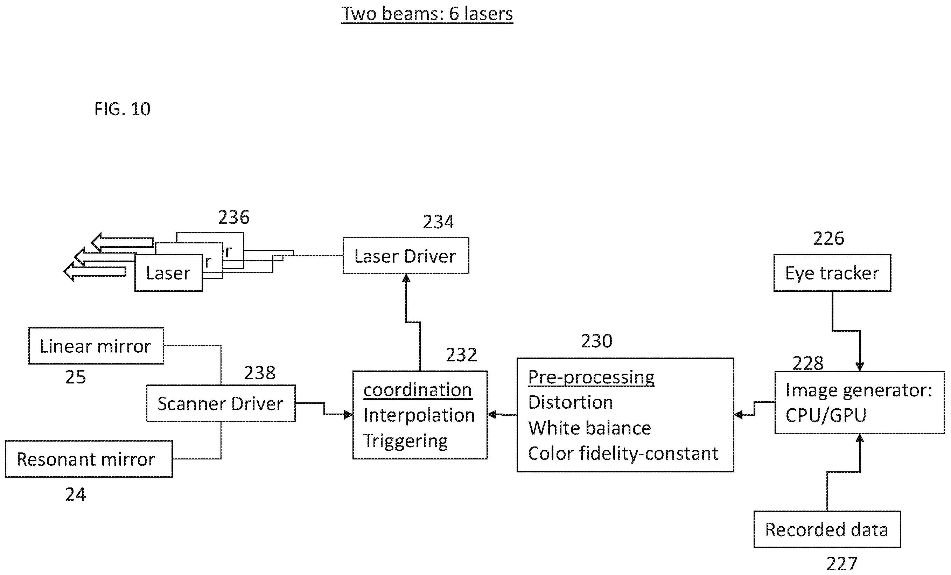

Broadening of the blue PSF also enables a reduction of the blue resolution provided by controller 228 (Fig. 10). As an example, if the green image has an array of 1000x1000 pixels, and a pixel size of 5x5 microns, then the blue image, after widening of the PSF, may have an array of 333x333 pixels, and a pixel size of about 15 microns. The reduced resolution of the blue image reduces the size and complexity of the electronics in controller 228, as well as the required bandwidth of fast pulse modulation in the blue laser driver. If the resolution of the red image is also reduced, then a similar reduction in size, complexity, and bandwidth applies also to controller 228 and the red laser driver. Thus, the display controller 228 will modulate the intensity of the green source according to pixel data corresponding to an image of a first resolution, and will modulate the intensity of the blue source, and optionally also the red source, according to pixel data corresponding to an image of a second resolution, the second resolution being lower than the first resolution.

Broadening the blue PSF can be implemented by various methods, in either the relay section (after MLA 29) or the laser section (before MLA 29) of the optical layout in FIG. 1. For example, chromatic aberration may be introduced in relay section so that the lens focal lengths corresponding to red, green, and blue illumination are different. By placing the focal plane of 32 (or 276) at a distance relative to MLA 29 that is sub-optimal (defocused) for blue, and nearly optimal for green and red, the blue PSF is broadened and the blue image is of lower resolution at the image display.

However, the use of chromatic aberration for PSF broadening at the relay may not be the best approach, for two reasons. First, a lack of collimation in the blue optics gives rise to spatial non-uniformity of the blue image intensity, and possibly to other image artifacts. Furthermore, in some cases, the eye of an observer may compensate, or "accommodate", the defocusing of the blue image and re-focus the lens of the eye to sharpen the blue laser image. In such a case, the power density on the retina of the eye, after accommodation, may exceed the MPE.

Another more preferred approach to PSF broadening, which overcomes the above difficulties, is to defocus the blue laser beam in the laser section, before the light reaches image plane at the MLA 29. This not only broadens the PSF as required, but also partially removes optical phase information after passage through a diffuser or MLA in image plane. Consequently, the image on the image display cannot be refocused by the eye of an observer, and the reduced power density on the retina of the eye are maintained. Furthermore, the blue illumination reaching entrance pupil 34 is well-collimated by lens 32 (or 276), and no non-uniformities appear in the blue image presented to the observer.

It should be noted that PSF broadening of the blue illumination may also be accomplished by shifting the position of the blue laser in FIG. 1 along the optical path so that to a location which is slightly out-of-focus at the image plane. All of the methods for PSF broadening may also be applied to the red illumination as well.

The aforementioned PSF broadening for the blue laser illumination may be implemented both in the case of side-by-side laser deployment or where the laser beams are combined along a common axis. The side-by-side configuration provides the added advantage of distributing the light intensity over a larger area, as already discussed, and is therefore typically preferred.

De-flickering by color-fidelity reduction

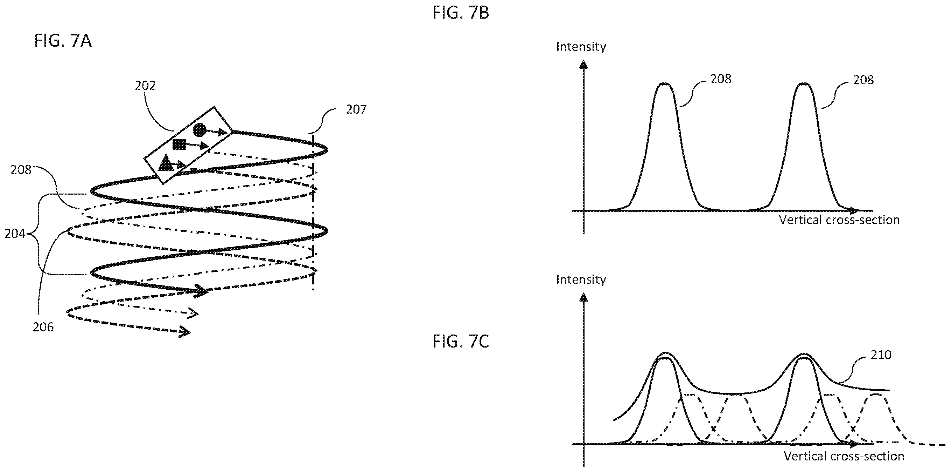

In FIG. 7A, the different color spots of FIGS. 5A or 6A are presented having different shapes for clarity. The color laser spots 202 include circle with solid line-scan as red, rectangle with dot-dash as green and triangle with dashed line as blue.

The lasers are arranged at the focal plane having specific orientation considering the scanning speed so that during scan the traces (scan lines) do not overlap as shown. The gap between two scans of red 204 contains traces of blue 206 and green 208.

The human vision is insensitive to color at peripheral field, therefore as long as all colors are illuminated (some deviations from white) the observer will perceive all traces illuminated having no difference. Therefore, the perception will be that gap 204 is illuminated uniformly and there are no gaps at the edges of the field. Therefore, minimal flicker will be observed for images that have white or balanced gray levels (including a combination of colors) at the periphery. If, however, the peripheral region of a projected image has high coloration, this means that one or more of the other colors will be at low intensity, leaving non-illuminated regions that give rise to flicker.

To take advantage of these observations, according to one aspect of the present invention, a display for displaying an image to a viewer employs a set of laser light sources including at least one red source R1, R2 generating a red light beam, at least one green source G1, G2 generating a green light beam, and at least one blue source B1, B2 generating a blue light beam, the red, green and blue light beams being side-by-side. A scanning optical arrangement employs at least one scanning mirror 24, 25 to generate a scanning motion of the red light beam, the green light beam and the blue light beam in a two-dimensional scanning pattern. A display controller, including at least one processor, is associated with the set of laser light source and with the scanning arrangement, and modulates an intensity of each of the laser light sources synchronously with the scanning motion so as to generate an image at an image plane. A collimating optical arrangement collimates light from the image at the image plane for display to the viewer.

It is particular feature of certain embodiments of one aspect of the present invention that the display controller is further configured to: (i) determine a current region of interest of the image, and (ii) modify pixel color data for modulation of the laser light sources so as to reduce a color saturation in at least part of the image outside the current region of interest. In other words, after determining which area(s) are not currently the region of interest, the color saturation in those regions can be reduced while maintaining the luminance of those regions, thereby at least partially equalizing the intensity of the three colors, and thereby filling gaps between the different color scans which might otherwise cause disturbing flicker.

This approach is illustrated in FIGS. 7B and 7C. FIG. 7B illustrates image illumination intensity along a vertical line 207 in FIG. 7A in a region of an image which is red only (two near crossings shown as single peek 208). The gap between scan lines is apparent. FIG. 7C shows image illumination intensity along the same line of the same image, but with suppressed color-fidelity (reduced color saturation but maintained luminance). In this case, the red (solid) continues to be the dominant color, but the green (dot-dash) and the blue (dash) are also illuminated so that the overall luminance envelope 210 has reduced non-uniformity. Since human peripheral vision has low sensitivity to colors, this will be perceived as uniform illumination, thereby reducing perceived flicker.

As mentioned, the above approach is predicated on the observation that, at the center of the visual field, the human eye is sensitive to color but not to flickering, while at the peripheral vision, the converse is true: the eye is insensitive to color but more sensitive to flickering. These eye properties can be used to suppress visibility of flickering without compromising on perceived color fidelity.

Various approaches may be used to define the "region of interest" within the image. In certain applications, particularly where different parts of a display are used to present different types of information, it may be possible to predefine certain regions of the display as being more critical for color fidelity and other regions as being less critical. More preferably, the "region of interest" is dynamically defined by one of a number of approaches. Options include, but are not limited to:

1. Use of an eye tracking arrangement deployed for tracking a current line of sight of the eye of the user. The display controller then determines the current region of interest based upon an input received from the eye tracking arrangement.

2. Where the image to be displayed is a video image, the display controller processes content of the video image to derive the current region of interest, for example, in regions in which there is significant motion.

3. In some cases, where the image is a video image, the display controller may receive along with the image data an associated data stream indicative of a current region of interest associated with the video image.

In each of these cases, since it is assumed that the observer is looking at the region of interest, the color fidelity within that region is unaltered. If flickering exists in this region, it will not be noticeable due to the insensitivity of the central visual field to flicker. The color-fidelity of the rest of the field can be reduced (according to the distance from the region of interest and the non-uniformity likely to occur in that region of the display) by image processing. In this manner, flickering will be suppressed while the color modification will not be noticeable. As the region of interest move across the field, so does the region in which color-fidelity is maintained, as described.

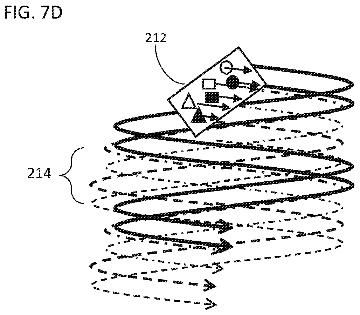

FIG. 7D is similar to FIG. 7A but shows an arrangement of 6 laser spots 212, two of each RGB color, similar to that illustrated in FIG. 6A, above. Other arrangements are possible. By arranging the traces not to overlap (by choice of lasers staggering orientation, spacing and scanning speeds), the gap 214 (in this example, between adjacent traces of the red lasers) is filled with traces of the other colors. Proper, tilt and setting of vertical scan speed will generate an even distribution of the traces. In this way, the aforementioned color-fidelity management as explained with reference to FIGS. 7B and 7C can be implemented very efficient to achieve de-flickering.

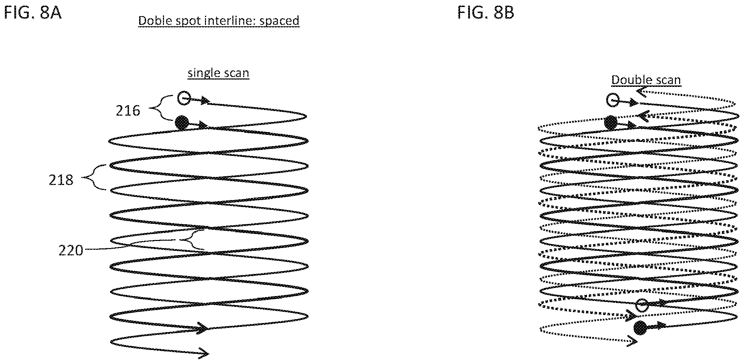

In the examples illustrated thus far, the scanning patterns employing two channels have illustrated the channels as being adjacent (FIG. 3D). FIG. 8A illustrates an alternative configuration in which the laser channels have a gap between them. Placing the laser channels adjacent has the advantage that the center of the field does not have gaps (region 75 of FIG. 3D), so there is no flickering at the center of the field, but suffers from the disadvantage that the gap at the side of the field is double (region 73 in FIG. 3D). In the configuration of FIG. 8A, the two spaced channels have between them a gap, spaced as two pixels 216 with a gap of one empty pixel between them. FIG. 8B shows a combination trace also including the back scan. Because of the channel arrangement, the gap at the side of the field 218 is only one pixel flicker than from the gap 73 of FIG. 3D), but in this case, the center now also has a gap of one pixel (marked 220 in FIG. 8A), which introduces more flicker than would occur at region 75 of FIG. 3D.

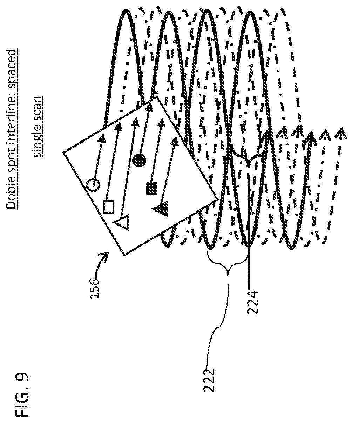

FIG. 9 illustrates this spaced-apart approach applied to a set of two three-color channels 156. A non-overlapping arrangement of the traces preferably fills the gaps at the side of the field 222 (similar to region 214 of FIG. 7D, but with narrower gaps), and also fills the gaps at the center of the field 224.

In this arrangement 156, the aforementioned foveated reduced color-fidelity may be applied to advantage across the entire field (not only at the edges), so if the current region of interest is located at the side of the field, then color fidelity may advantageously be reduced in the rest of the image, including the center. Because of the smaller gap between the traces, less color fidelity reduction is needed.

It should be noted that here, and throughout the drawings, scanning patterns are illustrated schematically as if the laser spots are close to each other, either one pixel or two pixels apart. However, for reasons of eye-safety discussed above, as well as for convenience of manufacture, the physical distance between the laser spots is preferably much larger, and for optimal eye safety, preferably corresponds to half a degree or more. The traces of motion of those laser spots however do have the proximity (e.g., adjacent pixels, or spaced-apart by one pixel) as represented in the schematic illustrations. This larger spacing of the laser spots generates correspondingly larger margins above and/or to the sides of the frame described in FIGS. 4C and 5B. These margins are not shown here in most of the drawings for clarity of presentation in the out-of-scale schematic drawings.

FIG. 10 shows a block diagram illustrating schematically a laser driver suitable for implementing this and other aspects of the present invention, particularly for the example of a two-channel laser scanning system. The image is received or generated by the CPU processor 228. The CPU may also receive from an eye tracker 226 a signal indicative of a gaze direction of the observer, thereby defining a region of interest. Alternatively, the region of interest is received from recorded data 227 associated with the image to be projected, or is derived directly from the image data. The CPU defines a color-fidelity modification where needed, and transfers the image to pre-processor 230 (which may include two separate pre-processors corresponding to the two laser channels). The preprocessor 230 does image modifications associated with the specific channel. This includes white balance and continuous color-fidelity modification. Hardware 232 coordinates pulses according to mirror position information from a scanner driver 238, and a laser driver 234 drives the electrical power to lasers 236.

Depolarization

By way of introduction, a further aspect of the present invention relates to optical assemblies, systems and methods for reducing non-uniformity of an image coupled out of a light-guide optical element (LOE or substrate or waveguide) in cases where the illumination of the image is derived from one or more laser, and where the coupling-out configuration is sensitive to the polarization of the light propagating within the LOE, as is the case with coupling-out based on obliquely-angled partially-reflective internal surfaces and diffractive coupling-out configurations. The principles of this aspect of the present invention are applicable to a wide range of displays which are illuminated by light from one or more laser, including displays based on rapid scanning of a modulated laser beam to successively illuminate sequential pixels and displays in which laser illumination is used to illuminate a spatial light modulator (SLM), such as an LCOS (liquid crystal on silicon) image generator or a micromirror modulator. In the case of illuminating an SLM, the illumination may be static "flood" illumination, or may be illumination which is scanned across a surface of the SLM.

Injecting unpolarized light into a waveguide typically generates a uniform image. (There can be additional causes for dark stripes within the projected image due to various limitations of certain optical designs, but such problems can be avoided proper optical design and are not addressed here.) According to an aspect of the present invention, effectively unpolarized light may be generated by introducing illumination from two uncorrelated lasers having approximately the same wavelength but orthogonal polarizations. Any deviation in wavelength between the two lasers (discussed further below) is preferably sufficiently small that the two wavelengths are perceived chromatically as the same color.

Figure 11A shows a waveguide configuration 158 having two sets of internal reflectors 250 and 252 to achieve two-dimensional aperture expansion for projecting an image towards an eye of an observer. The light from a projector is injected into the waveguide 254 through prism 258 and guided by total internal reflection (TIR) until being reflected by reflectors 250. The redirected light continues to be guided and reflectors 252 reflect the light out 256 to observer eye. Reflectors 250 and 252 are polarization selective. A first polarized orientation of laser light that is injected into waveguide 254 will generate non-uniform image as shown in FIG. 11B, image 260. A second orthogonally polarized laser light injected into waveguide 254 generates another non-uniform but complementary image 262. By injecting, simultaneously, the two orthogonally polarized lasers, a uniform image is generated, as shown in image 264 of FIG. 11B. These two orthogonally polarized couples of lasers are preferably implemented on each color (R, G and B), requiring a total of 6 lasers.

Although the examples given herein refer to pairs of two lasers per color, the invention may also be implemented using three or more lasers of the same color. It is common to describe polarization parameters as vectors on the mathematically-defined Poincare-sphere. The above definition of two laser beams having orthogonal polarization can be generalized mathematically as referring to two opposite vectors on the Poincare-sphere thereby having combined Poincare-vector of Zero magnitude. This same mathematical description can be used to define the desired relative polarizations for more than two beams of same color to also satisfy the requirement that the combined vector is of zero magnitude. Such combinations are also referred to as "orthogonal."

Thus, according to the present invention, a display for displaying an image to a viewer includes an image generator having an illumination subsystem generating illumination of at least a first color, the image generator employing the illumination to generate an image. Projection optics projects illumination from the image for display to the viewer. It is a particular feature of the present invention that the illumination subsystem includes a first laser generating a first laser beam of the first color with a first polarization and a second laser generating a second laser beam of the first color with a second polarization, and that the first and second polarizations are orthogonal at the input of the light-guide optical element.

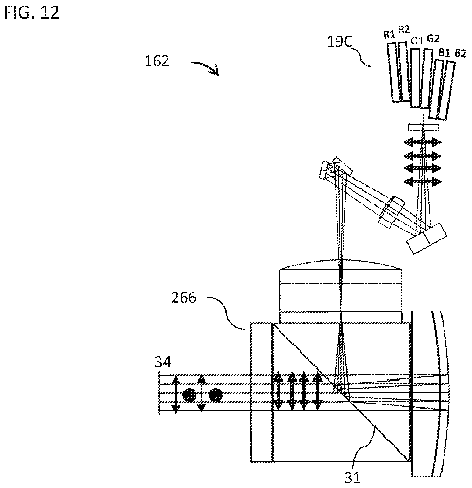

Implementations of the depolarization aspect of the present invention can be subdivided broadly into two categories according to whether the image generator and/or image projecting optics include polarizing elements. Thus, for example, devices employing a polarization-modifying spatial light modulator, such as an LCOS modulator, or that uses PBS-based optics in an image projector, clearly cannot achieve depolarization until the light has traversed the last polarizing element of the image generator and the projector. One such example is illustrated in FIG. 12, where optics based on a PBS 31 are used as part of the collimating image projector.

In order to allow depolarization of the plane-polarized laser illumination emerging from the collimating image projector, the first and second laser beams are implemented with a small difference of less than 5% in their respective wavelengths. This differential in wavelength is sufficiently small that each pair of lasers is perceived as the same color, but is sufficient to provide different rates of rotation of the polarization as the image illumination propagates through a length of birefringent material, thereby allowing the two laser components to be differentially rotated until their polarization planes are substantially orthogonal.

In the implementation of FIG. 12, a depolarizer is placed in the light path after PBS plane 31. In this architecture all lasers have the same initial polarization orientation (shown as double headed arrows), but each pair of two lasers of each color have slightly different wavelength (for example 9 nanometers difference at wavelength of 550 nanometer). The relatively thin birefringent window 266 (for example 1.7mm crystal quartz where principle axes are at 45 degrees) will diverge the relative polarizations of the two lasers to be 90 degree apart (shown as dots and double headed arrows) and therefore generate the complimentary images 260 and 262 to be perceived as the image 264. The spectral (color) difference of the two combined images will not be noticeable.

Since the different color lasers use the same window, the spectral difference between every two lasers of every color is most preferably set to achieve approximately 90 degrees polarization rotation over the same length. For example, if using a 1.7 mm crystal quartz window, then an optimal non-limiting example would employ a spectral difference of 12nm for 640nm wavelength, 9nm for 550nm and 7nm for 470nm wavelength.

It is best if the two (now orthogonal) polarizations be oriented according to waveguide orientation (perpendicular and parallel) for this a waveplate can be introduced adjacent to window 266 to set this orientation.

In some cases, the perpendicularity of the polarization of the two lasers may drift or otherwise be inaccurate. Optionally in such cases, an active polarization rotator (for example LCD) may be introduced at the window 266 in addition to the birefringent crystal.

A number of options are available for generating pairs of lasers with a predefined small offset in wavelength between them. These include:

    1. Structural modification:

        1.1. Wavelength selective resonator: Laser resonance can be set to resonate at different wavelength by introducing wavelength selective optics in the resonator such as selective mirrors or gratings.
        1.2. External feedback: using external cavity optical reflectors (mirror or grating) that reflect the light back into the resonator, can also cause the laser to be active at a predefined wavelength.

    2. Modification of an activation parameter:

        2.1. Temperature: Stabilizing two lasers at different temperatures will enable transmission at two different wavelengths.
        2.2. Different operating current: the current for each laser causes a shift in wavelength. For example, one laser can transmit short and narrow pulses while the other longer with less intensity.

    3. Modification of gain medium:

        3.1. Changing the bandgap in a semiconductor laser will change the laser wavelength. Slight modification of doping can achieve this.

3.2. Coating layers structure of the laser itself (quantum dot configuration as an example) will modify laser output wavelength.

The choice of what birefringent material to use will depend on the magnitude of the wavelength differential and the available light path length to achieve the required orthogonalization of the polarization. In certain implementations, a block of quartz crystal is a preferred choice of material. Various birefringent polymer materials are also suitable.

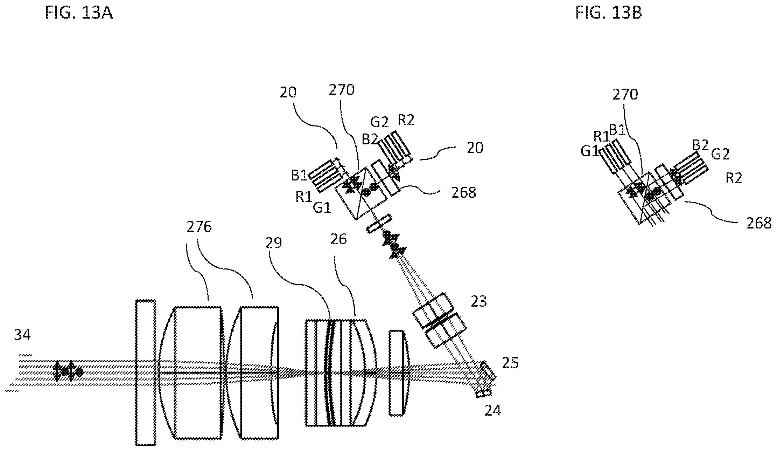

The arrangement of FIG. 12 requires the aforementioned wavelength offset in order to achieve orthogonal polarization of the two components using a relatively short optical path within a birefringent material after the light leaves the last polarized beam splitter (PBS). The use of PBS-based optics in the projector inherently generates a polarized output, so the orthogonal polarization can only be generated at a subsequent stage of the optical arrangement. In contrast, FIG. 13A illustrates an arrangement which employs non-polarizing optics, such as free-space optics, for scanning (where relevant), directing and collimating the image illumination. In this case, it becomes feasible to generate a compound beam made up of pairs of laser beams with orthogonal polarization combined into a single beam, and allows the use of identical wavelengths for the two beams. In this case, it is typically not necessary to further modify the polarization properties of the beam on entry into waveguide, except in some cases to align the axes with the principal axes of the waveguide as mentioned earlier.

Thus, Figure 13A shows a case of an optical system not incorporating polarization components at collimating optics 276. One set of RGB lasers light P-polarization is rotated by a wave plate 268 to be S polarized (shown as dots) while the other set of lasers are transmitted at P polarization (shown as double headed arrows) onto PBS 270. The light from this point on across the optical system includes both polarizations and no depolarizer is needed.

The combination of every set of RGB lasers can include dichroic combiner 20 (as shown) or can be side by side on every side of PBS 270 thereby generating separate side-by-side spots as shown in FIG. 13B (showing only the lasers combined to the PBS). Equivalent depolarization can also be achieved if all 6 lasers are side-by-side as the laser assembly 19C shown in FIG. 6B and have spots as shown in FIG. 6A.

The present invention of depolarization by combining two lasers is also applicable when laser is uses to flood illuminate or scan image generating matrix such as Amplitude or phase modulating LCOS (polarization sensitive) or micro mirror matrix such as Digital Light Processing (DLP) by Texas Instrument.

In scanning applications, the fact that the lasers scan the field of view through the same optical aperture (the scanner mirror), alleviates the need for the two orthogonally polarized lasers to have overlapping beams. Thereby depolarization is applicable on configuration 162 as shown in FIG. 12. In this figure, the configuration 162 shows an equivalent architecture to the device 100 in FIG. 2A, with lasers assembly 19C and additional birefringent window 266 placed between the collimating optics and the output aperture 34.

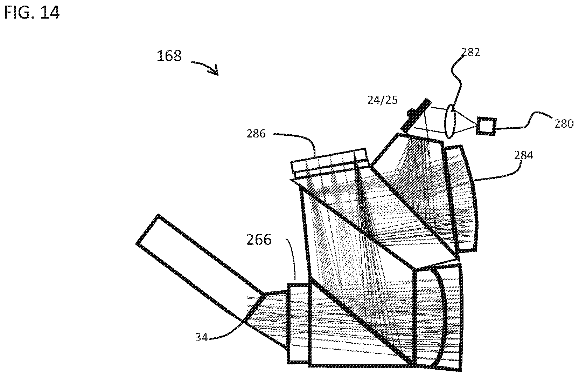

FIG. 14 illustrates a further display implementation according to the teachings of an embodiment of the present invention. In this case, laser section 280 is collimated by lens 282 and scanned by scanners 24 and 25 (in this drawing, a single two-axis scanner is presented). The light from the scanner is focused by optics 284 onto LCOS 286. From the LCOS the reflected light is collimated onto the exit aperture 34, which is the entrance to the LOE (shown here not to scale). In this example the optical system is based on polarizing beam splitter therefore depolarization is performed by introducing into laser section 280 pairs of wavelength-differentiated lasers of the same perceived color and at the same polarization, as described with reference to FIG. 12. Birefringent window 266 is here placed just after the PBS.

An equivalent system without using a PBS can be implemented on using a DLP arrangement, where the optical section can be equivalent to the lasers shown in FIGS. 13A or 13B. Side-by-side lasers with selective polarization rotation can also be implemented.

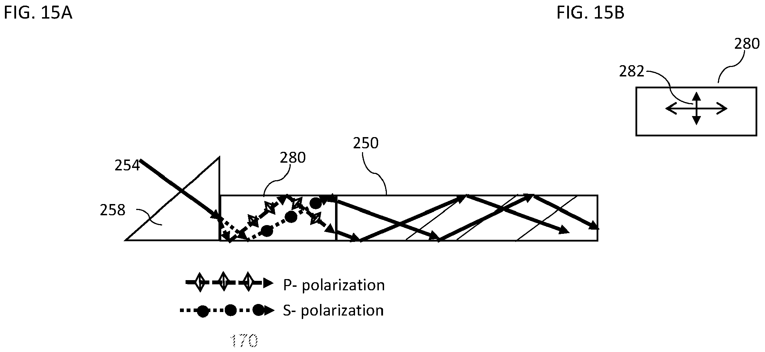

Although illustrated above with a birefringent depolarization window deployed as part of the projection optics immediately after the PBS, the birefringent component may alternatively be integrated with a waveguide. Such an implementation is illustrated here in FIG. 15A. This implementation may allow use of a relatively long depolarizing block of birefringent material, which can achieve effective depolarization of even a single laser beam (without the aforementioned wavelength offset).

Thus, FIG. 15A shows an implementation of a birefringent section 280 integrated into a waveguide 250, thereby achieving depolarization (or polarization rotation) over a relatively long optical path. The injected light enters coupling prism 258 that is attached to transparent section of birefringent material 280. Afterwards the light passes to section 250 that includes the reflecting facets. The orientation of the principle axis 282. (FIG. 15B) of the birefringent section 280 should be parallel to the main axes of the waveguide orientation, and the laser illumination should be injected into the waveguide with its plane of polarization at roughly 45 degrees to those axes.

The light entering section 280 will refract according to refractive index of every polarization as shown in polarizations 170 (P and S polarization). The TIR will not cause coupling between the polarizations since the principle axis are orthogonal. As the light exits the birefringent section 280 onto the next section 250, the light beams of the two polarization well become parallel once again. The relatively long propagation in the birefringent section can be used effectively to achieve depolarization of even a single laser light beam, despite its narrow spectral width.

It will be appreciated that the above descriptions are intended only to serve as examples, and that many other embodiments are possible within the scope of the present invention as defined in the appended claims.

## Claims

1. A display (500) for displaying an image to a viewer, the display comprising:

   (a) an image generator having an illumination subsystem generating illumination of at least a first color, said image generator employing said illumination to generate an image;
   (b) projection optics for projecting illumination from the image for display to the viewer, said projection optics comprising:

      (i) collimating optics for collimating said illumination from said image generator to generate a collimated image, and
      (ii) a light-guide optical element (506) having a pair of parallel major external surfaces (508, 510) for guiding the collimated image within the light-guide optical element (506) by internal reflection, the light-guide optical element (506) having a coupling-out configuration for redirecting at least part of the collimated image towards the viewer,

   **characterized in that**

   said illumination subsystem comprises a first laser generating a first laser beam of the first color with a first polarization and a second laser generating a second laser beam of the first color with a second polarization, said first and second polarizations being in a parallel state,
   said first laser beam and said second laser beam have respectively a first wavelength and a second wavelength, said first and second wavelengths differing by less than 5%, and wherein said projection optics comprises a length of birefringent material configured to differentially rotate said first and second polarizations from said parallel state to a substantially orthogonal state at an input of the light-guide optical element,
   said image generator comprises a polarization-modifying spatial light modulator illuminated by said first and second laser beams, and
   said birefringent material is deployed in a light path from said collimating optics to said light-guide optical element.

2. The display of claim 1, wherein said illumination subsystem generating laser beams of the first color comprises at least three lasers, said at least three lasers (236) having polarization vectors that have a combined Poincaré-vector of zero magnitude.

3. The display of claim 1, wherein said first laser beam and said second laser beam are deployed to generate side-by-side beams with mutually-orthogonal polarizations.

4. The display of claim 1, wherein said image generator further comprises a scanning optical arrangement comprising at least one scanning mirror, said scanning arrangement being deployed for generating a scanning motion of said first and second laser beams in at least one direction so as to sequentially illuminate different regions of said spatial light modulator.

5. The display of claim 1, wherein said collimating optics comprises at least one polarized beam splitter.

6. The display of claim 1, wherein said birefringent material is a block of quartz crystal.

7. The display of any one of claims 1-6, wherein said illumination subsystem further comprises a third laser and a fourth laser generating laser beams of a second color having orthogonal polarizations at said image, and a fifth laser and a sixth laser generating laser beams of a third color having orthogonal polarizations at said image.

8. The display of claim 5, wherein said illumination subsystem further comprises a third laser and a fourth laser generating laser beams of a second color having orthogonal polarizations at said image, and a fifth laser and a sixth laser generating laser beams of a third color having orthogonal polarizations at said image.

9. The display of claim 6, wherein said illumination subsystem further comprises a third laser and a fourth laser generating laser beams of a second color having orthogonal polarizations at said image, and a fifth laser and a sixth laser generating laser beams of a third color having orthogonal polarizations at said image.

10. A display (500) for displaying an image to a viewer, the display comprising:

(a) an image generator having an illumination subsystem generating illumination of at least a first color, said image generator employing said illumination to generate an image;
(b) projection optics for projecting illumination from the image for display to the viewer, said projection optics comprising:

(i) collimating optics for collimating said illumination from said image generator to generate a collimated image, and
(ii) a light-guide optical element (506) having a pair of parallel major external surfaces (508, 510) for guiding the collimated image within the light-guide optical element (506) by internal reflection, the light-guide optical element (506) having a coupling-out configuration for redirecting at least part of the collimated image towards the viewer,

**characterized in that**

said illumination subsystem comprises a first laser generating a first laser beam of the first color with a first polarization and a second laser generating a second laser beam of the first color with a second polarization, said first and second polarizations being orthogonal,
said first laser beam and said second laser beam are combined into a single beam by a polarization beam combiner of said illumination subsystem to form a single beam containing two orthogonal polarizations said two orthogonal polarizations being orthogonal also at an input of the light-guide optical element, and
said image generator further comprises a scanning optical arrangement comprising at least one scanning mirror, said scanning arrangement being deployed for generating a scanning motion of first and second laser beams in at least one direction.

11. The display of claim 10, wherein said illumination subsystem further comprises a third laser and a fourth laser generating laser beams of a second color having orthogonal polarizations at said image, and a fifth laser and a sixth laser generating laser beams of a third color having orthogonal polarizations at said image.

**Patentansprüche**

1. Anzeige (500) zum Anzeigen eines Bildes für einen Betrachter, wobei die Anzeige umfasst:

(a) einen Bildgenerator, der ein Beleuchtungssubsystem umfasst, das eine Beleuchtung von mindestens einer ersten Farbe erzeugt, wobei der Bildgenerator die Beleuchtung verwendet, um ein Bild zu erzeugen;
(b) eine Projektionsoptik zum Projizieren einer Beleuchtung aus dem Bild zu einer Anzeige für den Betrachter, wobei die Projektionsoptik umfasst:

(i) einer Kollimationsoptik zum Kollimieren der Beleuchtung vom Bildgenerator, um ein kollimiertes Bild zu erzeugen, und
(ii) ein lichtleitendes optisches Element (506) mit einem Paar paralleler Hauptaußenflächen (508, 510) zum Führen des kollimierten Bildes innerhalb des lichtleitenden optischen Elements (506) durch interne Reflexion, wobei das lichtleitende optische Element (506) eine Auskopplungskonfiguration zum Umlenken zumindest eines Teils des kollimierten Bildes in Richtung des Betrachters aufweist,

**dadurch gekennzeichnet, dass**

das Beleuchtungssubsystem einen ersten Laser, der einen ersten Laserstrahl der ersten Farbe mit einer ersten Polarisation erzeugt, und einen zweiten Laser, der einen zweiten Laserstrahl der ersten Farbe mit einer zweiten Polarisation erzeugt, umfasst, wobei die ersten und zweiten Polarisationen in einem parallelen Zustand sind, der erste Laserstrahl und der zweite Laserstrahl jeweils eine erste Wellenlänge und eine zweite Wellenlänge aufweisen, wobei sich die erste und die zweite Wellenlänge um weniger als 5% unterscheiden, und die Projektionsoptik einen Abschnitt aus doppelbrechendem Material umfasst, der dazu geeignet ist, die erste und die zweite Polarisation von dem parallelen Zustand in einen Zustand, der im Wesentlichen orthogonal zu einem Eingang des lichtleitenden optischen Elements ist, unterschiedlich zu drehen,

der Bildgenerator einen räumlichen Lichtmodulator umfasst, der die Polarisation ändert und durch den ersten und den zweiten Laserstrahl beleuchtet wird, und

das doppelbrechende Material in einem Lichtweg von der Kollimationsoptik zum lichtleitenden optischen Element verwendet wird.

2. Anzeige nach Anspruch 1, wobei das das erste Farblaserstrahlen erzeugende Beleuchtungssubsystem mindestens drei Laser umfasst, wobei die mindestens drei Laser (236) Polarisationsvektoren aufweisen, die einen kombinierten Poincare-Vektor mit einer Nullmagnitude aufweisen.

3. Anzeige nach Anspruch 1, wobei der erste Laserstrahl und der zweite Laserstrahl verwendet werden, um nebeneinanderliegende Strahlen mit gegeneinander orthogonalen Polarisationen zu erzeugen.

4. Anzeige nach Anspruch 1, wobei der Bildgenerator ferner eine optische Abtastanordnung mit mindestens einem Abtastspiegel umfasst, wobei die Abtastanordnung dazu verwendet wird, eine Abtastbewegung des ersten und des zweiten Laserstrahls in mindestens einer Richtung zu erzeugen, um nacheinander verschiedene Bereiche des räumlichen Lichtmodulators zu beleuchten.

5. Anzeige nach Anspruch 1, wobei die Kollimationsoptik mindestens einen polarisierten Strahlteiler umfasst.

6. Anzeige nach Anspruch 1, wobei das doppelbrechende Material ein Quarzkristallblock ist.

7. Anzeige nach einem der Ansprüche 1 bis 6, wobei das Beleuchtungssubsystem ferner einen dritten Laser und einen vierten Laser, die Laserstrahlen einer zweiten Farbe mit orthogonalen Polarisationen am Bild erzeugen, und einen fünften Laser und einen sechsten Laser, die Laserstrahlen einer dritten Farbe mit orthogonalen Polarisationen am Bild erzeugen, umfasst.

8. Anzeige nach Anspruch 5, wobei das Beleuchtungssubsystem ferner einen dritten Laser und einen vierten Laser, die Laserstrahlen einer zweiten Farbe mit orthogonalen Polarisationen am Bild erzeugen, und einen fünften Laser und einen sechsten Laser, die Laserstrahlen einer dritten Farbe mit orthogonalen Polarisationen am Bild erzeugen, umfasst.

9. Anzeige nach Anspruch 6, wobei das Beleuchtungssubsystem ferner einen dritten Laser und einen vierten Laser, die Laserstrahlen einer zweiten Farbe mit orthogonalen Polarisationen am Bild erzeugen, und einen fünften Laser und einen sechsten Laser, die Laserstrahlen einer dritten Farbe mit orthogonalen Polarisationen am Bild erzeugen, umfasst.

10. Anzeige (500) zum Anzeigen eines Bildes für einen Betrachter, wobei die Anzeige umfasst:

(a) einen Bildgenerator, der ein Beleuchtungssubsystem umfasst, das eine Beleuchtung mindestens einer ersten Farbe erzeugt, wobei der Bildgenerator die Beleuchtung dazu verwendet ist, um ein Bild zu erzeugen;
(b) eine Projektionsoptik zum Projizieren einer Beleuchtung aus dem Bild zur Anzeige für den Betrachter, wobei die Projektionsoptik umfasst:

(i) eine Kollimationsoptik zum Kollimieren der Beleuchtung vom Bildgenerator, um ein kollimiertes Bild zu erzeugen, und
(ii) ein lichtleitendes optisches Element (506) mit einem Paar paralleler Hauptaußenflächen (508, 510) zum Führen des kollimierten Bildes innerhalb des lichtleitenden optischen Elements (506) durch interne Reflexion, wobei das lichtleitende optische Element (506) eine Auskopplungskonfiguration zum Umlenken zumindest eines Teils des kollimierten Bildes in Richtung des Betrachters aufweist,

**dadurch gekennzeichnet, dass**

das Beleuchtungssubsystem einen ersten Laser, der einen ersten Laserstrahl der ersten Farbe mit einer ersten Polarisation erzeugt, und einen zweiten Laser, der einen zweiten Laserstrahl der ersten Farbe mit einer zweiten Polarisation erzeugt, umfasst, wobei die ersten und zweiten Polarisationen gegeneinander orthogonal sind,

der erste Laserstrahl und der zweite Laserstrahl durch einen Polarisationsstrahlkombinierer des Beleuchtungsuntersystems zu einem einzigen Strahl kombiniert werden, um einen einzelnen Strahl mit zwei orthogonalen Polarisationen zu bilden, wobei die beiden orthogonalen Polarisationen daher orthogonal zu einem Eingang des lichtleitenden optischen Elements sind, und

der Bildgenerator ferner eine optische Abtastanordnung mit mindestens einem Abtastspiegel umfasst, wobei die Abtastanordnung dazu verwendet wird, eine Abtastbewegung des ersten und des zweiten Laserstrahls in mindestens einer Richtung zu erzeugen.

11. Anzeige nach Anspruch 10, wobei das Beleuchtungssubsystem ferner einen dritten Laser und einen vierten Laser, die Laserstrahlen einer zweiten Farbe mit orthogonalen Polarisationen am Bild erzeugen, und einen fünften Laser und einen sechsten Laser, die Laserstrahlen einer dritten Farbe mit orthogonalen Polarisationen am Bild erzeugen, umfasst.

**Revendications**

1. Affichage (500) destiné à afficher une image à un observateur, l'affichage comprenant :

(a) un générateur d'image comportant un sous-système d'éclairement qui génère un éclairement d'au moins une première couleur, ledit générateur d'image utilisant ledit éclairement pour générer une image ;
(b) une optique de projection destinée à projeter l'éclairement provenant de l'image afin de l'afficher à l'observateur, ladite optique de projection comprenant :

(i) une optique de collimation destinée à collimater ledit éclairement provenant dudit générateur d'image afin de générer une image collimatée, et
(ii) un élément optique de guidage de lumière (506) comportant une paire de surfaces extérieures principales parallèles (508, 510) destinées à guider l'image collimatée à l'intérieur de l'élément optique de guidage de lumière (506) par réflexion interne, l'élément optique de guidage de lumière (506) ayant une configuration de sortie par couplage destinée à rediriger au moins une partie de l'image collimatée vers l'observateur,

**caractérisé en ce que**

ledit sous-système d'éclairement comprend un premier laser qui génère un premier faisceau laser de la première couleur avec une première polarisation et un deuxième laser qui génère un deuxième faisceau laser de la première couleur avec une deuxième polarisation, lesdites première et deuxième polarisations étant dans un état parallèle,
ledit premier faisceau laser et ledit deuxième faisceau laser ont respectivement une première longueur d'onde et une deuxième longueur d'onde, lesdites première et deuxième longueurs d'onde différant de moins de 5 %, et ladite optique de projection comprenant une portion de matériau biréfringent conçue pour faire tourner de manière différentielle lesdites première et deuxième polarisations dudit état parallèle à un état sensiblement orthogonal à une entrée de l'élément optique de guidage de lumière,
ledit générateur d'image comprend un modulateur de lumière spatial qui modifie la polarisation et qui est éclairé par lesdits premier et deuxième faisceaux laser, et
ledit matériau biréfringent est utilisé dans un chemin de lumière allant de ladite optique de collimation audit élément optique de guidage de lumière.

2. Affichage selon la revendication 1, ledit sous-système d'éclairement qui génère des faisceaux laser de la première couleur comprenant au moins trois lasers, lesdits au moins trois lasers (236) comportant des vecteurs de polarisation qui ont un vecteur de Poincaré combiné de magnitude nulle.

3. Affichage selon la revendication 1, ledit premier faisceau laser et ledit deuxième faisceau laser étant utilisés pour générer des faisceaux côte à côte avec des polarisations orthogonales entre elles.

4. Affichage selon la revendication 1, ledit générateur d'image comprenant en outre un ensemble de balayage optique qui comprend au moins un miroir de balayage, ledit ensemble de balayage étant utilisé pour générer un mouvement de balayage desdits premier et deuxième faisceaux laser dans au moins une direction de manière à éclairer séquentiellement différentes régions dudit modulateur de lumière spatial.

**5.** Affichage selon la revendication 1, ladite optique de collimation comprenant au moins un séparateur de faisceau polarisé.

**6.** Affichage selon la revendication 1, ledit matériau biréfringent étant un bloc de cristal de quartz.

**7.** Affichage selon l'une des revendications 1 à 6, ledit sous-système d'éclairement comprend en outre un troisième laser et un quatrième laser qui génèrent des faisceaux laser d'une deuxième couleur de polarisations orthogonales au niveau de ladite image, et un cinquième laser et un sixième laser qui génèrent des faisceaux laser d'une troisième couleur de polarisations orthogonales au niveau de ladite image.

**8.** Affichage selon la revendication 5, ledit sous-système d'éclairement comprenant en outre un troisième laser et un quatrième laser qui génèrent des faisceaux laser d'une deuxième couleur de polarisations orthogonales au niveau de ladite image, et un cinquième laser et un sixième laser qui génèrent des faisceaux laser d'une troisième couleur de polarisations orthogonales au niveau de ladite image.

**9.** Affichage selon la revendication 6, ledit sous-système d'éclairement comprenant en outre un troisième laser et un quatrième laser qui génèrent des faisceaux laser d'une deuxième couleur de polarisations orthogonales au niveau de ladite image, et un cinquième laser et un sixième laser qui génère des faisceaux laser d'une troisième couleur de polarisations orthogonales au niveau de ladite image.

**10.** Affichage (500) destiné à afficher une image à un observateur, l'affichage comprenant :

(a) un générateur d'image comportant un sous-système d'éclairement qui génère un éclairement d'au moins une première couleur, ledit générateur d'image utilisant ledit éclairement pour générer une image ;
(b) une optique de projection destinée à projeter l'éclairement provenant de l'image pour l'afficher à l'observateur, ladite optique de projection comprenant :

(i) une optique de collimation destinée à collimater ledit éclairement provenant dudit générateur d'image afin de générer une image collimatée, et
(ii) un élément optique de guidage de lumière (506) qui comporte une paire de surfaces extérieures principales parallèles (508, 510) destinées à guider l'image collimatée à l'intérieur de l'élément optique de guidage de lumière (506) par réflexion interne, l'élément optique de guidage de lumière (506) ayant une configuration de sortie par couplage destinée à rediriger au moins une partie de l'image collimatée vers l'observateur,

**caractérisé en ce que**

ledit sous-système d'éclairement comprend un premier laser qui génère un premier faisceau laser de la première couleur avec une première polarisation et un deuxième laser qui génère un deuxième faisceau laser de la première couleur avec une deuxième polarisation, lesdites première et deuxième polarisations étant orthogonales,
ledit premier faisceau laser et ledit deuxième faisceau laser sont combinés en un faisceau unique par un combineur de faisceaux de polarisation dudit sous-système d'éclairement afin de former un faisceau unique contenant deux polarisations orthogonales, lesdites deux polarisations orthogonales étant donc orthogonales à une entrée de l'élément optique de guidage de lumière, et
ledit générateur d'image comprend en outre un ensemble optique de balayage qui comprend au moins un miroir de balayage, ledit ensemble de balayage étant utilisé pour générer un mouvement de balayage des premier et deuxième faisceaux laser dans au moins une direction.

**11.** Affichage selon la revendication 10, ledit sous-système d'éclairement comprenant en outre un troisième laser et un quatrième laser qui génèrent des faisceaux laser d'une deuxième couleur de polarisations orthogonales au niveau de ladite image, et un cinquième laser et un sixième laser qui génèrent des faisceaux laser d'une troisième couleur de polarisations orthogonales au niveau de ladite image.

EP 4 042 675 B1

512

500

508

510

514

514

506

502

504

FIG. 1A

512

500

508

510

502

504

516

506

FIG. 1B

FIG. 2A

FIG. 2B

FIG. 2C

FIG. 2D

FIG. 3A

Single scan: interline
108

45A

45B

44  42

64

62

Vertical axis

Horizontal axis

FIG. 3B

Single back-scan: interline
110

FIG. 3C

Double scan: interline
112

70
72

FIG. 3D

FIG. 3E

113A

Doble spot interline: adjacent single scan

77

73

75

113B

Double scan

EP 4 042 675 B1

FIG. 4A

FIG. 4B

FIG. 4C

FIG. 4D

FIG. 4E

FIG. 5A

FIG. 5B

76
77
78

80
81
82

FIG. 5C

FIG. 5D

FIG. 6A

FIG. 6B

FIG. 6D

138

FIG. 6C

136

FIG. 7A

FIG. 7B

FIG. 7C

202
207
208
204
206
208
208

Intensity

Vertical cross-section

Intensity

210

Vertical cross-section

EP 4 042 675 B1

FIG. 7D

FIG. 8A

Doble spot interline: spaced

single scan

216

218

220

FIG. 8B

Double scan

EP 4 042 675 B1

FIG. 9

Doble spot interline: spaced

single scan

Two beams: 6 lasers

FIG. 10

EP 4 042 675 B1

FIG. 11A

FIG. 11B

EP 4 042 675 B1

EP 4 042 675 B1

FIG. 12

FIG. 13B

FIG. 13A

FIG. 14

EP 4 042 675 B1

FIG. 15A

FIG. 15B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011292321 A

- WO 2019111237 A

**Non-patent literature cited in the description**

- Lasers and Optoelectronics: Fundamentals, Devices and Applications,. 2013, 599-603